# EUROPÄISCHE PATENTANMELDUNG

(11) **EP 2 369 121 A2**
(43) Veröffentlichungstag der Anmeldung: **28.09.2011**
(21) Anmeldenummer: 10013517.7
(22) Anmeldetag: 11.10.2010
(51) Int. Cl.: E06B 9/32, H04L 12/28

(54) **Eingabegerät für die Steuerung eines Gerätes der Haustechnik**

(30) Priorität: 25.03.2010 AT 4832010; 01.10.2010 AT 16442010
(71) Anmelder: ABATEC Electronic AG, 4844 Regau (AT)
(72) Erfinder: Niederndorfer, Friedrich, 4840 Pilsbach (AT); Warter, Ernst, 4850 Timelkam (AT)

(57) **Zusammenfassung**

Die Erfindung betrifft ein Eingabegerät für die Steuerung eines Gerätes der Haustechnik. Das Eingabegerät ist ein aus Sensorfläche und Auswerteelektronik bestehender kapazitiver Näherungssensor und/oder eine piezoelektrische Sensorfläche. Die Sensorfläche ist in oder an einem Fenster oder einer Tür jenes Raumes angeordnet, auf welchen das Gerät der Haustechnik wirkt.

## Beschreibung

Die Erfindung betrifft ein Eingabegerät für die Steuerung eines Gerätes der Haustechnik.

Die EP 1898040 A2 beschreibt ein Handgerät, welches dazu dient, eine motorisch antreibbare Jalousie einzustellen. Das Handgerät weist dazu eine besonders leicht intuitiv bedienbare Benutzerführung auf.

In der DE 10043062 A1 wird vorgeschlagen, Haustechnik mittels eines Mobiltelefons zu steuern. Dazu sei am Mobiltelefon ein Befehlssatz vorzusehen und im Haus ein Steuergerät vorzusehen, welches Steuersignale vom Mobiltelefon empfangen kann und dementsprechend Geräte im Haus ansteuert.

In der DE 102007002257 A1 wird vorgeschlagen, die Scheibe eines Fensters eines Kraftfahrzeuges mit einer Reihe von Drucksensoren auszustatten, damit zu erfassen an welcher Stelle wie stark an die Scheibe gedrückt wird und in Abhängigkeit vom Ergebnis dieser Erfassung entsprechend einer hinterlegten Zuordnungsvorschrift Vorgänge zu steuern. Beispielsweise soll damit auch ermöglicht werden, die Tür des KFZ aufzusperren, indem man mit der Hand in passender Abfolge an bestimmte Punkte auf der Scheibe drückt. Beispielsweise in den Schriften DE 102005006861 A1, DE 102007047887 A1, EP 1152533 B1 und WO 2010060767 A1 sind kapazitive Näherungssensoren beschrieben, also Sensoren, welche darauf beruhen, dass sich bei Annäherung eines Körpers, wie beispielsweise einer Hand oder eines Fingers eines Menschen, im Sensor eine elektrische Kapazität messbar ändert und dass diese Änderung mit Mitteln der elektrischen Messtechnik festgestellt und als Information weiterverarbeitet wird.

Die Schriften DE 102006058785 A1, DE 102006059273 A1 und EP 1343252 B1 zeigen Anwendungen derartiger Sensoren dazu, einen Einklemmschutz unter anderem bei maschinell angetriebenen Türen und Fenstern von Kraftfahrzeugen zu realisieren.

In der EP 1762689 A2 wird ein Sensor für eine Einbruchsmeldeanlage an einem Fenster vorgeschlagen. Dabei wird eine Dichtung oder eine Dichtleiste verwendet, deren elektrische Kapazität sich bei Verformung ändert.

Die der Erfindung zu Grunde liegende Aufgabe besteht darin, ein Eingabegerät für die Steuerung eines Gerätes der Haustechnik bereitzustellen. Gegenüber bekannten Eingabegeräten soll das bereitzustellende Eingabegerät besser unauffällig anbringbar und dabei dennoch sehr gut intuitiv bedienbar sein können.

Zum Lösen der Aufgabe wird vorgeschlagen, als Eingabegerät einen aus Sensorfläche und Auswerteelektronik bestehenden kapazitiven Näherungssensor und/oder eine piezoelektrische Sensorfläche zu verwenden und die Sensorfläche in oder an einem Fenster (vertikale Fenster oder Dachflächenfenster), einer Tür oder auf/in dem Griff des Fensters bzw. der Tür, des Raumes des Gebäudes anzubringen, auf welches das Gerät der Haustechnik wirken soll.

Die erfindungsgemäße Sensorfläche kann sehr unauffällig angebracht werden, da sie problemlos aus einer dünnen, flexiblen Sensorfläche und einer nur wenige cm³ ausfüllenden Auswerteelektronik aufbaubar ist. Bekanntlich kann die Sensorfolie dabei auch dann wirksam sein, wenn sie an der Innenseite der Wand eines nichtmetallischen Hohlprofils, im Scheibenzwischenraum von mehrscheibigen Gläsern oder im Fenster- oder Türgriff angebracht ist. Die Auswerteelektronik ist so klein ausführbar, dass sie auch problemlos in einem Hohlraum eines Fenster- oder Türrahmens oder zwischen den Schalen einer mehrschaligen Türfüllung "versteckbar" ist.

Es kann sinnvoll sein, die Auswerteelektronik um Sensoren zur Erfassung und Auswertung verschiedener physikalischer Größen wie z.B. Temperatur, Strömung, Helligkeit, CO2 Gehalt der Luft, Luftfeuchte, Luftdruck, Lautstärke, Druck zu ergänzen. Die zusätzlichen Sensoren, zur Erfassung physikalischer Größen, können am/im Fenster- oder Türrahmen oder in der näheren Umgebung des Fensters oder der Tür angebracht werden.

Die Erfindung wird unter Zuhilfenahme zweier Zeichnungen veranschaulicht:
Fig. 1: zeigt einen beispielhaften, erfindungsgemäß verwendbaren kapazitiven Näherungssensor, welcher als Sensorfläche verwendet werden kann.
Fig. 2: zeigt eine beispielhafte Anordnung der Erfindung an/in einem Fenster.

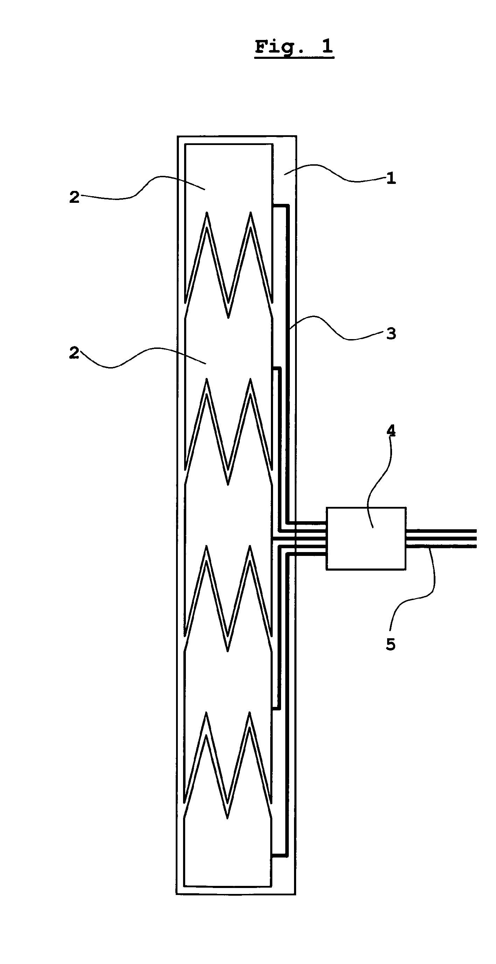

Die Sensorfläche des beispielhaften kapazitiven Näherungssensors gemäß Fig. 1 besteht aus einer Trägerfolie 1 und Leiterflächen 2, welche als Beschichtung daran angebracht sind. Die Trägerfolie 1 ist typischerweise eine dünne Kunststofffolie, welche transparent sein kann und auch einseitig mit einer Klebstoffschicht versehen sein kann. Die elektrisch leitfähige Leiterflächen 2 bestehen typischerweise aus einer dünnen Metallschicht. Sie sind über jeweils eine Leitung 3 mit der Auswerteelektronik 4 verbunden.

Die Auswerteelektronik 4 weist empfindliche Schwingkreisschaltungen auf, durch welche Änderungen der Kapazitäten der einzelnen Leiterflächen 2 gegenüber der Umgebung, wie sie bei Annäherung eines Fingers an die Flächen auftreten, detektierbar werden. Über Leitungen 5 wird die Auswerteelektronik 4 mit elektrischer Energie versorgt und liefert die Auswerteelektronik 4 Signale, vorzugsweise in digitalem Format, welche besagen ob und an welcher der Leiterflächen 2 gerade eine Schaltanweisung detektiert wurde. Sinnvoller Weise wird dabei dazu auch der zeitliche Verlauf von Kapazitätsänderung in die Auswertung miteinbezogen, sodass beispielsweise unterschiedliche Befehle generiert werden können, je nachdem ob kurz angetippt, kurz abgehoben, dauerhaft angelegt, oder dauerhaft abgehoben wird. Natürlich kann die Signalübertragung anstatt über Leitungen auch über Funk erfolgen.

Weiters kann die Energieversorgung autark erfolgen. Die autarke Energieversorgung kann mittels Akkumulator 10, welcher z.B. durch die Nutzung von Photovoltaikzellen 8 oder auch über Leitungen geladen wird, erfolgen. Anstatt einer Photovoltaikzelle 8 kann zum Laden des Akkumulators auch der Piezoeffekt, die Induktion von elektrischer Energie, die Nutzung von Windenergie oder der Seebeck-Effekt (Thermoelement) verwendet werden.

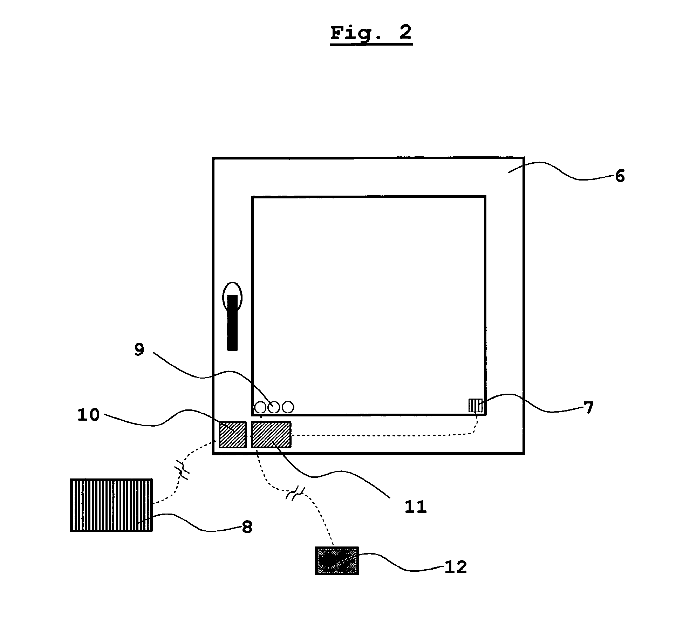

In Fig. 2 ist eine beispielhafte Anordnung der Erfindung in bzw. an einem Fenster 6 gezeigt. Die strichlierten Linien stellen Leitungen dar. Die Auswerteelektronik 11 erhält Eingaben von der Sensorfläche 9 und Daten (z.B. zur Kondensbildung) von einem Sensor 7. Der Akkumulator 10, welcher die Auswerteelektronik 11 mit Energie versorgt, wird z.B. mittels einer Photovoltaikzelle 8 geladen. Als Ergebnis der Eingaben wird von der Auswertelektronik 11 ein elektrisches Gerät 12 der Haustechnik gesteuert.

Die Signale werden von einer digitalen Steuereinheit 11, typischerweise von einer speicherprogrammierbaren Steuerung, in Abhängigkeit von deren Programm, dazu verwendet ein elektrisches Gerät 12, welches Teil eines Gerätes der Haustechnik ist, beispielsweise den Motor einer elektrisch betätigbaren Jalousie, ein- oder auszuschalten. Weiters kann die Steuereinheit 11 bei Erkennung von Kondensbildung am Fenster oder an der Tür - z.B. durch den Feuchtesensor 7 -, dazu verwendet werden, einen in den Tür- bzw. Fensterrahmen eingearbeiteten Heizdraht (nicht dargestellt) mit Energie zu versorgen um mittels der erzeugten Wärme der Kondensbildung entgegenzuwirken.

In einer weiteren Ausführungsform kann der Systemszustand (z.B. Elektronik aktiv, Öffnungsmodus automatisch, Akku bald leer,...) im/am oder in der näheren Umgebung des Fensters oder der Tür mittels Leuchtdioden (LED's) oder auf einem Display angezeigt werden.

Die aus Trägerfolie 1 und leitenden Flächen 2 bestehende Sensorfläche kann typischerweise mehrere Dezimeter lang sein, wenige Zentimeter breit sein, wenige Zehntelmillimeter dünn sein und beispielsweise zehn voneinander getrennte, hintereinander angeordnete Leiterflächen 2 aufweisen. Sie kann typischerweise an der Innenseite einer äußeren Profilwand eines Kunststoffprofils angebracht sein, welches Teil des Blendenrahmens oder des Flügelrahmens eines Fensters oder einer Tür ist, weiters kann die Sensorfläche auch am/im Griff des Fensters oder der Tür angebracht sein. In einem besonders vorteilhaften Anwendungsfall dazu, kann durch Antippen eines Fingers in den Bereich einer der leitenden Flächen 2, bestimmt werden, dass die Untergrenze einer Jalousie, welche an dem Fenster angebracht ist, bis auf die Höhe dieser leitenden Fläche abgesenkt oder angehoben wird.

Wenn für die Leiterflächen 2 leitende Materialien verwendet werden, welche für sichtbares Licht transparent sind - wie typischerweise leitfähige Kunststoffe - kann die Sensorfläche auch an einer Glasfläche, typischerweise an einer inneren Oberfläche einer Einzelscheibe eines Mehrscheibenglases angebracht sein, und dabei dennoch unsichtbar sein. Es kann aber auch vorteilhaft sein, sie ganz oder teilweise sichtbar auszuführen und an einer Glasfläche anzubringen.

Typischerweise reagiert ein kapazitiver Näherungssensor ab Annäherung eines Fingers an seine Sensorfläche auf etwa 0,5 cm. Es können aber auch weniger sensible und sensiblere Einstellungen vorbereitet werden. Anzumerken ist, dass bei sehr sensiblen Einstellungen - also Einstellungen bei denen schon bei Annäherung auf mehrere cm ein Signal gegeben wird - die Störungsanfälligkeit steigt.

Die Auswerteelektronik 4 nebst Substrat auf dem sie angeordnet ist, inklusive schützendem Gehäuse und Anschlusssteckern, findet problemlos in einem flachen Prisma mit wenigen cm³ Rauminhalt Platz. Damit ist auch die Auswerteelektronik problemlos in oder an Teilen einer Tür oder eines Fensters oder auch etwas entfernt davon geschützt und unauffällig anbringbar.

Aus Sensorfläche und dazupassender Auswerteelektronik gebildete, kapazitive Näherungssensoren sind - vor allem als kapazitive Touchscreentechnik im nF-Bereich mit innerer Referenzkapazität - eine an sich bekannte Technologie und brauchen deswegen hier nicht grundlegend erklärt zu werden.

Anzumerken ist noch, dass Form und Anordnung von leitenden Flächen 2 von Sensorflächen weitgehend frei wählbar sind. Es können beispielsweise auch Leiterflächen entlang einer Kreislinie aneinander gereiht werden, sodass durch Bewegen eines Fingers entlang einer Kreisbahn eine Einstellung vorgenommen werden kann.

Ebenso können kreisringförmige Leiterflächen zueinander konzentrisch angeordnet werden, sodass durch radiales Bewegen eines Fingers an einem Kreis, Einstellungen vorgenommen werden können. Natürlich lassen sich diese Prinzipien auch kombinieren, dass also eine Sensorfläche durch Leiterflächen 2 in Ringsegmente oder in Felder einer zweidimensionalen Matrix unterteilt wird, wobei dann unterschiedlichen Richtungen unterschiedliche davon abhängige Größen zugeordnet sein können, wie beispielsweise Helligkeit einer Beleuchtung und Position des am stärksten beleuchteten Bereiches in einem Raum.

Die Anbringung der Eingabegeräte an Türen und Fenstern ist aus mehreren Gründen besonders vorteilhaft. Für wesentliche Größen, die durch Haustechnik eingestellt werden, passt es intuitiv sehr gut, dass sie von Türen oder Fenstern aus einstellbar sind. Man denke an Licht, Wärme, Lüftung, Stellung von Jalousien. Türen sind zudem die Orte eines Raumes, an welchen sich Menschen zwangsweise begeben wenn sie einen Raum betreten; um an das Einstellgerät zu gelangen sind also oftmals keine separaten Schritte erforderlich. An den Flächen und in den Hohlräumen, die an Türen und Fenstern vorkommen, kann man die Eingabegeräte zudem sehr gut unterbringen, wobei das Unterbringen auch industriell durch das passende Anbringen von Sensorflächen im Herstellungsbetrieb für Fenster und Türen vorbereitet werden kann.

Zumeist ist es vorteilhaft an der Oberfläche, welche man zwecks Steuerns von Haustechnik zu berühren hat bzw. an die man einen Finger annähern muss, Symbole, beispielsweise auf einseitig klebenden Folien anzubringen, durch welche die Steuerungsfunktionen angedeutet werden und durch welche einzelne Positionen markiert sind.

Bei Verwendung der Sensorfläche und der Auswertelektronik in Kombination mit verschieden Sensoren wie z.B. einem Temperatursensor, kann die Erfindung auch dazu verwendet um beispielsweise durch Erkennen eines raschen Temperaturanstiegs, einen Brand im Gebäude zu detektieren. Als Folge könnte z.B. das Fenster automatisch geschlossen werden um ein weiteres Anfachen des Feuers durch Zugluft zu vermeiden.

In einem weiteren Anwendungsfall könnte z.B. durch das Messen und Auswerten der Temperatur und Luftfeuchte, das Öffnen bzw. Schließen des Fensters so gesteuert werden um ein möglichst optimales Raumklima zu erreichen.

An Stelle von kapazitiven Näherungssensoren können auch piezoelektrische Sensorflächen verwendet werden. Diese sind als flacher Verbund mehrerer Schichten aufgebaut. Druck auf eine äußere Schicht bewirkt zufolge Piezo-Effekts ein elektrisches Signal, welches - abhängig vom Aufbau der Eingabefläche - einer Teilfläche der Eingabefläche zuordenbar ist und als Eingabesignal an eine Steuerung verwendet werden kann. Erfindungsgemäß werden piezoelektrische Sensorflächen auf Flächen von Fenstern, Türen, Fensterrahmen, Türrahmen oder Griffen aufgeklebt, oder in flache Vertiefungen in diesen Flächen eingeklebt, sodass sie bündig mit den Flächen abschließen. Für das Auslösen eines Signals durch piezoelektrische Sensorflächen ist es erforderlich, dass die Flächen direkt berührt werden, deshalb müssen sie an berührbaren Flächen angebracht werden und können nicht wie die zuvor besprochenen kapazitiven Näherungssensoren an der Innenseite einer Außenwand eines Hohlprofils angebracht werden. Vorteilhaft an piezoelektrische Sensorflächen gegenüber kapazitiven Näherungssensoren ist hingegen, dass sie weniger störungsanfällig sind und dass ihre Ausgangssignale einfacher als Eingangssignal für eine Steuerung verwendbar sind.

Im Rahmen einer umfassenderen Haustechniksteuerung können durch eine oder mehrere Steuerungsmodule eine Vielzahl von Geräten gesteuert werden. Dabei wird auch eine Mehrzahl von Eingabegeräten verwendet. Es ist sinnvoll, dabei je nach Anordnungsmöglichkeit entweder kapazitive Näherungssensoren oder piezoelektrische Sensorflächen zu verwenden und somit beide Eingabemöglichkeiten in der Gesamtanlage zu kombinieren.

## Patentansprüche

1. Eingabegerät für die Steuerung eines Gerätes der Haustechnik, **dadurch gekennzeichnet, dass** es ein aus Sensorfläche und Auswerteelektronik bestehender kapazitiver Näherungssensor und/oder eine piezoelektrische Sensorfläche ist, wobei die Sensorfläche in oder an einem Fenster oder einer Tür jenes Raumes angeordnet ist, auf welchen das Gerät der Haustechnik wirkt.

2. Eingabegerät nach Anspruch 1, **dadurch gekennzeichnet, dass** die Sensorfläche mindestens eine Trägerfolie (1) und darauf aufgebrachte, elektrischen Leiterflächen (2) aufweist, wobei mehrere Leiterflächen (2) auf einer gemeinsamen Trägerfolie angeordnet sind.

3. Eingabegerät nach Anspruch 2, **dadurch gekennzeichnet, dass** eine Sensorfläche in oder an einem Rahmenprofil eines Fensters angeordnet ist, sich in jener Richtung erststreckt, in welche eine an dem Fenster angeordnete Jalousie bewegbar ist und dass die Position, bis zu welcher eine Jalousie das Fenster abzudecken hat, durch Berühren der Sensorfläche am betreffenden Längsbereich einstellbar ist.

4. Eingabegerät nach einem der Ansprüche 1 bis 3, **dadurch gekennzeichnet, dass** die Sensorfläche ein kapazitiver Näherungssensor ist.

5. Eingabegerät nach Anspruch 4, **dadurch gekennzeichnet, dass** die Sensorfläche an der Innenseite einer äußeren Profilwand eines Rahmenprofils eines Fensters oder einer Tür angebracht ist.

6. Eingabegerät nach Anspruch 4, **dadurch gekennzeichnet, dass** die Sensorfläche an einer inneren Oberfläche einer Einzelscheibe einer mehrscheibigen Glasscheibe angebracht ist.

7. Eingabegerät nach Anspruch 4, **dadurch gekennzeichnet, dass** die Sensorfläche an der Innenseite einer Außenwand eines Griffes für ein Fenster oder einer Tür angebracht ist.
